Europäisches Patentamt

European Patent Office

Office européen des brevets

(11) Publication number: **0 032 760**
**B1**

# EUROPEAN PATENT SPECIFICATION

(45) Date of publication of patent specification: **16.01.85**

(51) Int. Cl.⁴: **F 16 L 1/04**

(21) Application number: **81200012.3**

(22) Date of filing: **07.01.81**

(54) **Method and apparatus for deploying a structure below the surface of a body of water.**

(30) Priority: **21.01.80 US 113985**
**31.03.80 US 135835**

(43) Date of publication of application:
**29.07.81 Bulletin 81/30**

(45) Publication of the grant of the patent:
**16.01.85 Bulletin 85/03**

(84) Designated Contracting States:
**DE FR GB IT NL**

(56) References cited:
**CA-A-1 001 905**
**DE-A-2 742 116**
**DE-B-1 181 505**
**DE-B-1 223 202**
**DE-B-1 229 348**
**FR-E- 80 801**
**US-A-3 620 028**
**US-A-3 727 417**
**US-A-4 159 189**

(73) Proprietor: **SHELL INTERNATIONALE**
**RESEARCH MAATSCHAPPIJ B.V.**
**Carel van Bylandtlaan 30**
**NL-2596 HR Den Haag (NL)**

(72) Inventor: **Ayers, Ray Rolland**
**12431 Honeywood Trail**
**Houston Texas (US)**

(74) Representative: **Aalbers, Onno et al**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a method for deploying a structure, for example a pipeline, below the surface of a body of water comprising fastening to the structure an arrangement including flotation means and fastening means, and allowing the structure to descend to a predetermined water depth where the floating action of the flotation means on the structure is removed.

Such a method is known from German Auslegeschrift DE—B—1 181 505. In this method flotation means, comprising a compressible material, are attached to the structure to be deployed, and the structure is allowed to descend below the surface of the body of water to a predetermined water depth. While the structure descends the flotation means are compressed proportional to the increasing water depth, and the floating action of the flotation means on the structure is gradually reduced until, at the predetermined water depth, the flotation means are so compressed that the floating action thereof on the structure is removed.

It is an object of the present invention to provide a simple and reliable method for deploying a structure below the surface of a body of water wherein the full floating action of the flotation means is acting on the structure, until it is removed when the structure reaches a predetermined water depth.

To this end the method for deploying a structure below the surface of a body of water according to the invention is characterized by providing the arrangement with a partially buckled hollow vessel, which vessel buckles further at the pressure pertaining to the predetermined water depth to provide said removal of the floating action.

The nature of this vessel (or propagating) buckling of the vessel at the pressure pertaining to the predetermined water depth is such that there is a large change in shape of the vessel, from, for example, round to fully flattened.

The invention further relates to an arrangement for use in the method according to the invention, which is characterized in that the partially buckled hollow vessel is the flotation means.

At the predetermined water depth the flotation means will flatten and thus lose most of its buoyancy. As the flotation means, after buckling, remains on the structure, weight is added to the structure for stability, but drag forces due to cross-currents are minimal because of the flattened profile of the flotation means. Such flotation means can be used in offshore oil and gas exploration/production activities, including construction and repair, to facilitate subsea placing of heavy structures or pieces of equipment, or to trigger any type of process such as detonating an explosive at a predetermined water depth, or to lay a long string of buoyed pipeline while the string is tensioned by a tug or similar tow vessel.

The use of flotation means is particularly attractive to provide stability and support to a pipe string during an offshore pipe-laying operation in deep water from a laybarge. As the pipe string is being laid, a segment thereof reaches the predetermined depth and the flotation means attached thereto collapses, causing that segment of pipeline to become heavier. This, in turn, causes the adjacent upper segment of the pipeline to descend, causing the next flotation means to collapse as the process is repeated continuously while the pipe string is being laid.

Alternatively, the flotation means can be continuous or in long strings.

The diameter of the vessel may be in the range of from 0.10 to 10 times the diameter of the pipeline to be deployed. Furthermore the wall thickness of the end closure may be equal to or greater than the wall thickness of the vessel.

The invention further relates to an arrangement for use in the method according to the present invention, which is characterized in that the partially buckled hollow vessel serves as an actuating means for releasing the fastening means.

In this embodiment of the invention use is made of the partially buckled hollow vessel as a trigger to release the flotation means. One use of this arrangement is to release buoys from a pipeline being deployed in relatively deep water. The buoys can be attached at intervals along the pipeline, and as water is allowed to enter the pipeline, the attached buoys move towards the bottom with the pipeline. At the predetermined water depth the vessel buckles further activating the trigger, and the fastening means releases, separating the buoys from the pipeline as each one in turn reaches the predetermined water depth.

The actuating means may be a partially flattened container, which container may have capped ends.

The invention also relates to a method for preparing a partially buckled hollow vessel susceptible to buckling at a preselected pressure for use in the arrangements according to the invention. This method comprises the steps of denting the mid-section of a cylindrical container, propagating the dent with fluid pressure outside the cylindrical container to reduce the cross-sectional area of at least part of the mid-section of the container without substantially collapsing the container, cutting the container into two parts at the reduced mid-section area, and closing the cut ends of the two parts of the container.

The container, such as a capped pipe, may be mechanically dented near the centre, and then it may be placed in a pressure vessel whereinto fluid under pressure is admitted to propagate the dent somewhat further. The pressure required to propagate the dent is noted, since this will be the pressure causing further buckling of the container. The pipe is then cut in half and the ends are closed, for example by capping or welding.

The present invention will now be described by way of example in more detail with reference to the accompanying drawings, wherein

Figure 1 discloses a pipelay application of the invention;

Figure 2 depicts a first alternative of the pipelay application disclosed in Figure 1;

Figure 3 depicts a second alternative of the pipelay application disclosed in Figure 1;

Figure 4 shows the release mechanism shown in Figure 3 on a larger scale;

Figures 5A and 5B show a collar release mechanism; and

Figures 6A, 6B and 6C show the steps involved in making means according to the invention, susceptible to buckling at a preselected pressure.

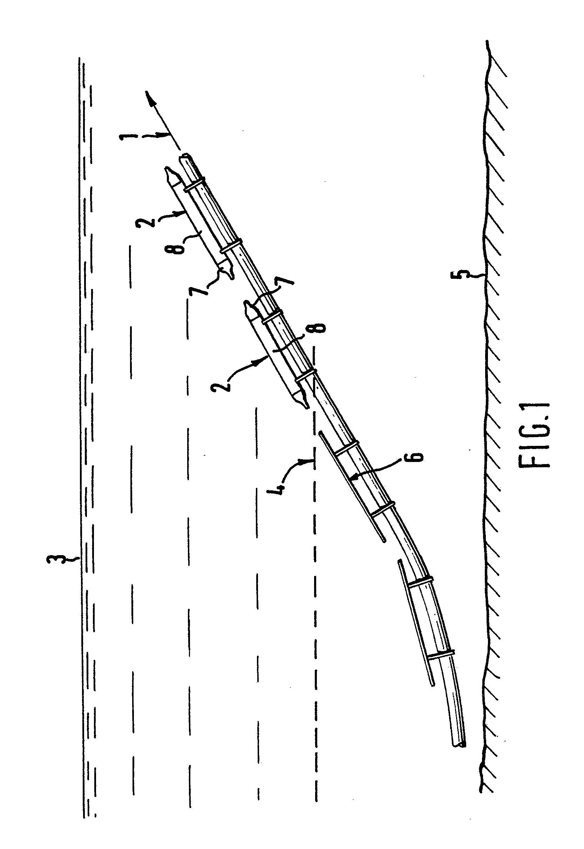

In Figure 1 is shown a means for rapidly laying a submarine pipeline with collapsible pipe buoys. It will be understood that other structures may be substituted for the pipeline in practice of the invention. As pipeline 1 passes over the stern of a vessel (not shown), an arrangement comprising buoys 2 and fastening means is attached, and the pipeline and the arrangement are allowed to descend beneath the water surface 3 to a predetermined water depth 4 (designated by a dotted line) where buckling of the buoys occurs. Then the pipeline 1 settles down to the sea floor 5 with attached buckled buoys 6, without the stresses which might otherwise occur with the use of a stinger for pipe laying.

Each pipe buoy 2 is a partially buckled hollow vessel comprising partially collapsed or buckled end closures 7 which are integrally welded or otherwise attached to an open-ended vessel 8 of cylindrical or near cylindrical shape. The open-ended vessel 8 is of relatively long length, e.g., from one pipeline diameter to the length of the pipeline section to be deployed, and made of thin-walled pipe, e.g., with a diameter to thickness ratio greater than 30 (for steel, lower for lighter metals). The end closures 7 have thicnesses the same as or thicker than the vessel 8. The partially collapsed or prepropagated end closures 7 facilitate collapse of the entire buoy 2 by propagating buckle mechanism at the water pressure pertaining to the predetermined water depth.

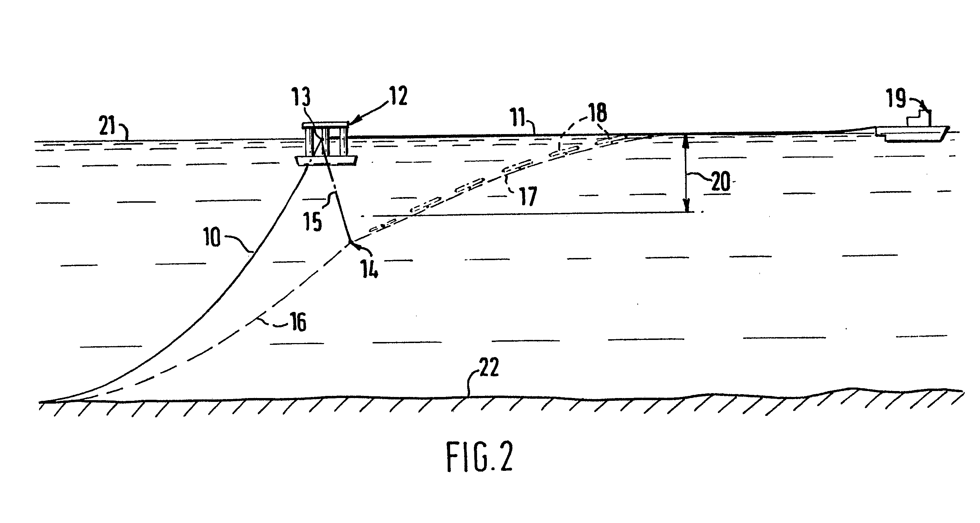

In Figure 2 there is shown a string tie-in pipe laying arrangement. A previously laid pipe string 10 is lifted up for tie-in to an additional pipe string 11 by a tie-in vessel 12. A hinge-type pipe connector 13, which seals as it is lowered, is attached to and connects lines 10 and 11. Partially lowered joint 14 (shown in Figure 2 in phantom only) is the sealed joint corresponding to connector 13 and held by a line 15 to vessel 12. The previously laid pipe string 10 then assumes the position of line 16 (shown in phantom) and the new pipe string 11 drops to the level of line 17 (shown in phantom). Buoys 18 are added to line 17 which is held by a tensioning tug 19 or similar means. Once the buoys 18 reach the critical depth 20 below the water surface 21, the buoys 18 substantially completely flatten and are lowered along with the pipeline to the sea floor 22.

As a pipe buoy collapses from one end to the other, the pneumatic pressure rises from ambient at the initiation of collapse to a value at which the pressure difference (external minus the internal pressure) is insufficient to "drive" the buckle further. Then the progressive buckling will stop, leaving some air inside. To make the pipeline heavier on bottom, an opening in the pipe buoy can be placed near the position where buckling would stop. This opening could be covered by a cover, pressed against the opening by a band around the pipe buoy to effect a seal. When the buckle passes through the band, the opening moves away from the cover, and the air exhausts from the buoy by relative buoyancy forces. The buoy thus achieves its maximum weight in this manner. Other standard types of air removal means, such as spring-loaded valves, could be used as well.

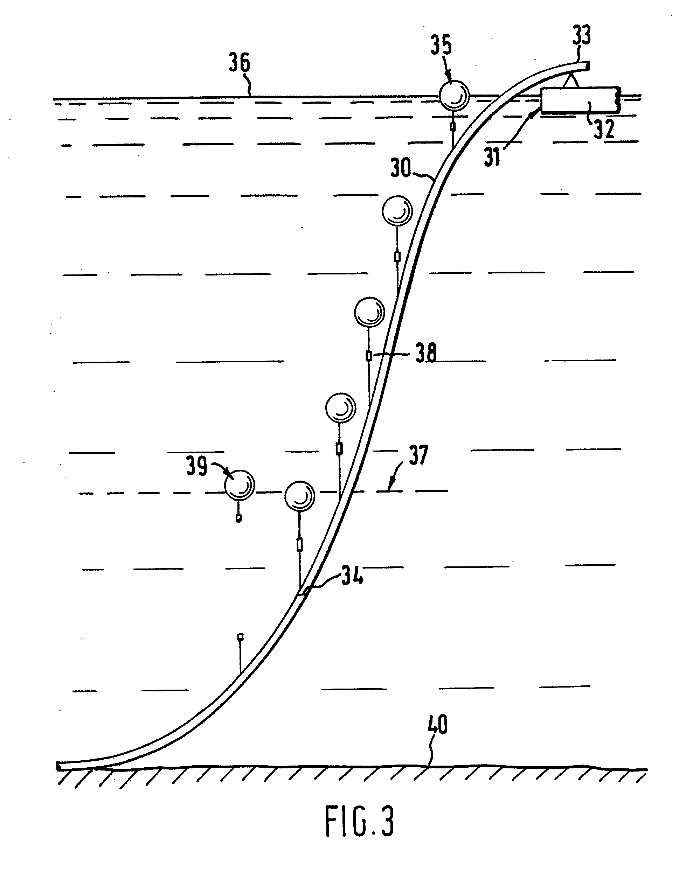

Reference is now made to Figure 3 depicting a second alternative of the pipelay method shown in Figure 1.

As disclosed in Figure 3 a submarine pipeline 30 is laid from the stern 31 of a barge 32. Water is admitted to the pipeline 30 at a water-fill location 33 to maintain a water level 34 which varies somewhat during the pipelay operation. As the pipeline 30 passes over the stern 31 of the barge 32, arrangements comprising buoys 35 and fastening means 38 are attached. The pipeline 30 and the arrangement are allowed to descend beneath the water surface 36 to a predetermined water depth 37 (designated by a dotted line) where release of the buoys 35 from the pipeline 30 occurs. When the actuating means of the fastening means 38 is activated, buoy 39 is released and starts to rise to the surface of the water, leaving the fastening means 38 still attached to the pipeline 30 where it will remain indefinitely. Then the pipeline gradually settles down to the sea floor 40 without the stresses which might otherwise occur with the use of a stinger only.

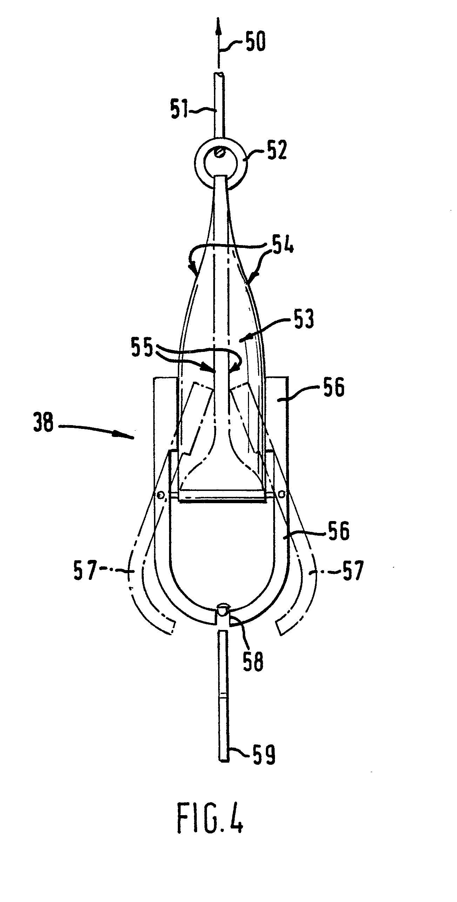

In Figure 4 the fastening means 38 described above is shown in more detail. A cable 50 is attached to a buoy (not shown in this figure) and to a cable end 51 which in turn is attached to a connecting ring 52 or similar means which is attached to trigger 53, which is a partially buckled hollow vessel.

The preflattened trigger 53, prior to being activated, is shown with sides 54 in solid outline. The final flattened shape of the trigger 53, after being activated, is shown with sides 55 in phantom. Rigid arms 56 show the position thereof in solid outline before the fastening means 38 is activated. Loose arms 57 shown in phantom configuration, show the position of arms 56 in dotted outline after the actuating means is activated and the trigger 53 is flattened. Thus, the water pressure causes the trigger 53 to buckle, arms 56 pivot about hinges and arm tips 58 move apart, releasing cable end 59 which is in turn attached to the structure being deployed beneath the surface of water, e.g., a pipeline or other oil production equipment (not shown in this figure).

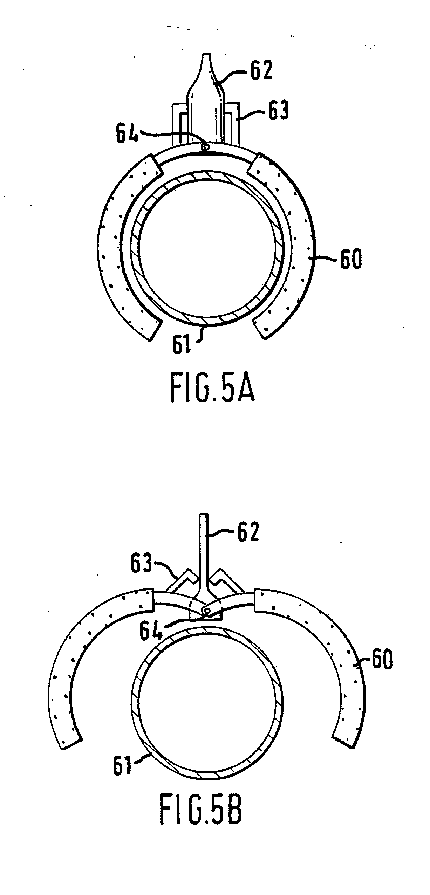

A variation of the invention employing a collar fastening means is shown in Figure 5. Flotation collar 60 encircles a pipeline (or other structure) 61. Trigger 62 has a rigid arm 63 preloaded against the trigger and connected to the flotation collar 60. As the trigger 62 releases by flattening (see Figure 5B) the arm 63 opens the flotation collar 60 about hinge 64, and drops the pipeline 61 (or other structure, e.g., oil production equipment).

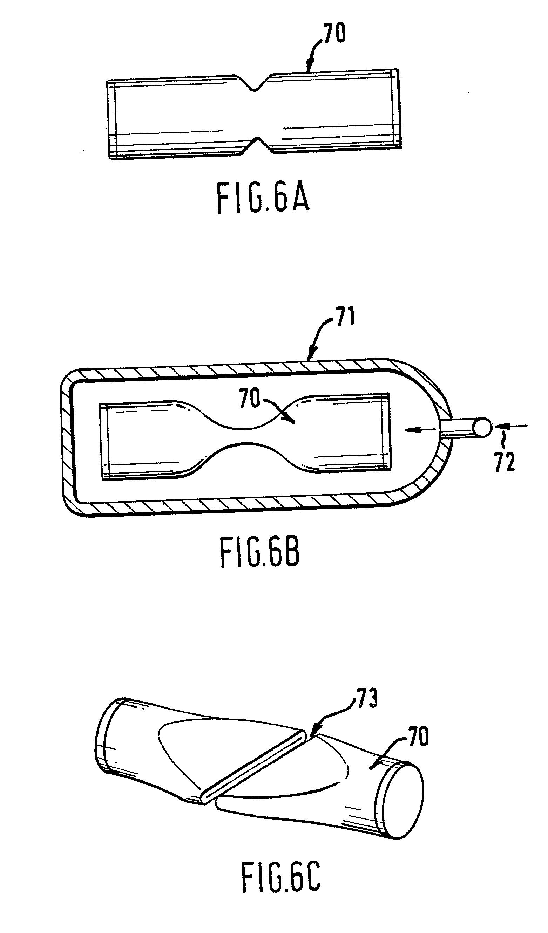

In Figures 6A, 6B and 6C the steps for making a prebuckled pipe susceptible to further buckling at a selected pressure are shown. Firstly, a container such as a capped pipe 70 is mechanically dented in the centre (see Figure 6A). Any cylindrical pressure vessel of arbitrary cross-section can be used and other mechanical techniques for denting the container may be utilized. Subsequently, the capped and dented pipe 70 is placed in a pressure vessel 71 (see Figure 6B), and a hydraulic fluid 72 under pressure is passed into the pressure vessel 71. The buckle initiated in the first step is propagated by the hydraulic fluid 72. The pressure required to propagate the buckle is noted since this will be the release pressure causing further buckling. Finally, the pipe 70 is cut in half and welded or otherwise closed at mid-section 73, see Figure 6C.

## Claims

1. Method for deploying a structure, for example a pipeline, below the surface of a body of water comprising fastening to the structure an arrangement including flotation means and fastening means, and allowing the structure to descend to a predetermined water depth where the floating action of the flotation means on the structure is removed, characterized by providing the arrangement with a partially buckled hollow vessel, which vessel buckles further at the pressure pertaining to the predetermined water depth to provide said removal of the floating action.

2. An arrangement for use in the method as claimed in claim 1, characterized in that the partially buckled hollow vessel is the flotation means.

3. Arrangement as claimed in claim 2, characterized in that the vessel is a cylinder provided with at least one partially buckled end closure.

4. Arrangement as claimed in claim 2 or 3, characterized in that the vessel is provided with means for exhausting trapped gas from the vessel.

5. Arrangement as claimed in claim 4, characterized in that the means for exhausting trapped gas is a spring loaded valve.

6. Arrangement as claimed in any one of the claims 2—5, characterized in that the length of the vessel ranges from about the diameter of the pipeline section to be deployed to the length of the pipeline section to be deployed.

7. Arrangement as claimed in any one of the claims 2—6, characterized in that the vessel is made of steel and that the ratio of the diameter of the vessel to the thickness thereof is greater than 30.

8. Arrangement as claimed in any one of the claims 2—7, characterized in that the diameter of the vessel ranges from 0.10 to 10 times the diameter of the pipeline to be deployed.

9. Arrangement as claimed in claim 3, characterized in that the wall thickness of the end closure is equal to or greater than the wall thickness of the vessel.

10. Arrangement for use in the method as claimed in claim 1, characterized in that the partially buckled hollow vessel serves as an actuating means for releasing the fastening means.

11. Arrangement as claimed in claim 10, characterized in that the actuating means is a partially flattened container.

12. Arrangement as claimed in claim 11, characterized in that the container has capped ends.

13. Arrangement as claimed in any one of the claims 10—12, characterized in that the fastening means comprise an arm attached to the actuating means and manipulative by further buckling of the actuating means.

14. Method for preparing a partially buckled hollow vessel for use in the arrangement as claimed in any one of the claims 2—13, comprising the steps of denting the mid-section of a cylindrical container, propagating the dent with fluid pressure outside the cylindrical container to reduce the cross-sectional area of at least part of the mid-section of the container without substantially collapsing the container, cutting the container into two parts at the reduced mid-section area, and closing the cut ends of the two parts of the container.

## Patentansprüche

1. Verfahren zum Ausbringen einer Baueinheit, z.B. einer Pipeline, unter der Oberfläche eines Wasserkörpers, bei dem mit der Baueinheit eine Anordnung aus Schwimmkörpern und Befestigungsmitteln verbunden wird, und man die Baueinheit auf eine vorbestimmte Wassertiefe absinken lässt, in der der von den Schwimmkörpern auf die Baueinheit ausgeübte Auftrieb aufgehoben wird, dadurch gekennzeichnet, dass die Anordnung mit einem teilweise eingebeulten hohlen Behälter, der bei dem der vorbestimmten Wassertiefe entsprechenden Druck weiter einbeult, um den Auftrieb aufzuheben, versehen wird.

2. Anordnung zur Verwendung bei dem Verfahe nach Anspruch 1, dadurch gekennzeichnet, dass der teilweise eingebeulte hohle Behälter der Schwimmkörper ist.

3. Anordnung nach Anspruch 2, dadurch gekennzeichnet, dass der Behälter ein mit mindestens einem teilweise eingebeulten Endverschluss versehener Zylinder ist.

4. Anordnung nach Anspruch 2 oder 3, dadurch gekennzeichnet, dass der Behälter eine Ablasseinrichtung für im Behälter eingeschlossenes Gas aufweist.

5. Anordnung nach Anspruch 4, dadurch gekennzeichnet, dass die Ablasseinrichtung für eingeschlossenes Gas ein federbelastetes Ventil ist.

6. Anordnung nach einem der Ansprüche 2 bis 5, dadurch gekennzeichnet, dass die Länge des Behälters von etwa dem Durchmesser des auszubringenden Pipelineabschnitts bis zu der Länge des auszubringenden Pipelineabschnitts reicht.

7. Anordnung nach einem der Ansprüche 2 bis 6, dadurch gekennzeichnet, dass der Behälter aus Stahl gefertigt und dass das Verhältnis der Durchmessers des Behälters zu seiner Dicke grösser als 30 ist.

8. Anordnung nach einem der Ansprüche 2 bis 7, dadurch gekennzeichnet, dass der Durchmesser des Behälters im Bereich des, 0,10-bis 10-fachen des Durchmessers der auszubringenden Pipeline liegt.

9. Anordnung nach Anspruch 3, dadurch gekennzeichnet, dass die Wandstärke des Endverschlusses gleich oder grösser ist als die Wandstärke des Behälters.

10. Anordnung zur Verwendung bei dem Verfahren nach Anspruch 1, dadurch gekennzeichnet, dass der teilweise eingebeulte hohle Behälter als Betätigungseinrichtung zum Lösen der Befestigungsmittel dient.

11. Anordnung nach Anspruch 10, dadurch gekennzeichnet, dass die Betätigungseinrichtung ein teilweise abgeflachter Behälter ist.

12. Anordnung nach Anspruch 11, dadurch gekennzeichnet, dass der Behälter mit Abdeckenden versehen ist.

13. Anordnung nach einem der Ansprüche 10 bis 12, dadurch gekennzeichnet, dass die Befestigungsmittel einen Arm aufweisen, der mit der Betätigungseinrichtung verbunden ist und der durch weiteres Ausbeulen der Betätigungseinrichtung betätigbar ist.

14. Verfahren zur Herstellung teilweise eingebeulter hohler Behälter zur Verwendung in einer Anordnung nach einem der Ansprüche 2 bis 13, gekennzeichnet durch die Schritte: Einbeulen des Mittelabschnitts eines zylinderförmigen Behälters, Vergrösserung der Einbeulung mittels auf der Aussenseite des zylinderförmigen Behälters aufgebrachten Flüssigkeitsdruckes, um die Querschnittsfläche mindestens eines Teils des Mittelabschnittes des Behälters zu verkleiner, ohne dass dabei der Behälter weitgehend kollabiert, Durchtrennen des Behälters im Bereich der verkleinerten Querschnittsfläche des Mittelabschnittes in zwei Teile und Verschliessen des Schnittenden der beiden Teile des Behälters.

**Revendications**

1. Procédé pour déployer une structure, par exemple un pipeline, au-dessous de la surface d'une masse d'eau selon lequel on fixe à la structure un dispositif comprenant des moyens de flottement et des moyens de fixation et on laisse descendre la structure jusqu'à une profondeur d'eau prédéterminée où l'action de flottement des moyens de flottement sur la structure est supprimée, caractérisé en ce que le dispositif comporte un récipient creux partiellement déformé, lequel récipient se déforme encore à la pression existant à la profondeur d'eau prédéterminée pour fournir la suppression de l'action de flottement.

2. Dispositif utilisable dans le procédé selon la revendication 1, caractérisé en ce que la récipient creux partiellement déformé est le moyen de flottement.

3. Dispositif selon la revendication 2, caractérisé en ce que le récipient est un cylindre comportant au moins une fermeture d'extrémité partiellement déformée.

4. Dispositif selon la revendication 2 ou 3, caractérisé en ce que la récipient est pourvu d'un moyen pour faire partir du récipient le gaz emprisonné.

5. Dispositif selon la revendication 4, caractérisé en ce que le moyen pour faire partir le gaz emprisonné est une soupape à ressort.

6. Dispositif selon l'une quelconque des revendications 2—5, caractérisé en ce que la longueur du récipient est comprise entre environ le diamètre de la section de pipeline à déployer et la longueur de la section de pipeline à déployer.

7. Dispositif selon l'une quelconque des revendications 2—6, caractérisé en ce que le récipient est formé d'acier et que le rapport entre le diamètre du récipient et son épaisseur est supérieur à 30.

8. Dispositif selon l'une quelconque des revendications 2—7, caractérisé en ce que le diamètre du récipient est compris entre 0,10 et 10 fois le diamètre du pipeline à déployer.

9. Dispositif selon la revendication 3, caractérisé en ce que l'épaisseur de paroi de la fermeture d'extrémité est égale ou supérieure à l'épaisseur de paroi du récipient.

10. Dispositif utilisable dans le procédé selon la revendication 1, caractérisé en ce que le récipient creux partiellement déformé sert de moyen d'actionnement pour détacher le moyen de fixation.

11. Dispositif selon la revendication 10, caractérisé en ce que le moyen d'actionnement est un récipient partiellement aplati.

12. Dispositif selon la revendication 11, caractérisé en ce que le récipient a des extrémités coiffées.

13. Dispositif selon l'une quelconque des revendications 10—12, caractérisé en ce que les moyens de fixation comprennent un bras attaché au moyen d'actionnement et manipulable par déformation supplémentaire du moyen d'actionnement.

14. Procédé pour préparer un récipient creux partiellement déformé utilisable dans le dispositif selon l'une quelconque des revendications 2—13, comprenant les étapes qui consistent à former une enfonçure dans la partie médiane d'une récipient cylindrique, à propager l'enfonçure au moyen d'une pression de fluide à l'extérieur du récipient cylindrique de façon à réduire la surface de section d'au moins une partie de la portion médiane de récipient sans écraser notablement le récipient, à couper le récipient en deux parties dans la région médiane de section réduite et à fermer les extrémités coupées des deux parties du récipient.

FIG.1

0032760

FIG.2

FIG.3

FIG.4

FIG.5A

FIG.5B

FIG.6A

FIG.6B

FIG.6C